# EUROPÄISCHE PATENTSCHRIFT

(11) **EP 3 645 433 B1**
(45) Veröffentlichungstag und Bekanntmachung des Hinweises auf die Patenterteilung: **28.06.2023**
(21) Anmeldenummer: 18736781.8
(22) Anmeldetag: 18.06.2018
(51) Int. Cl.: B65G 49/04

(54) **TRANSPORTVORRICHTUNG UND VERFAHREN ZUM TAUCHLACKIEREN**
TRANSPORT DEVICE AND METHOD FOR DIP-COATING
DISPOSITIF DE TRANSPORT ET PROCÉDÉ DE VERNISSAGE PAR IMMERSION

(30) Priorität: 30.06.2017 AT 505392017
(43) Veröffentlichungstag der Anmeldung: 06.05.2020
(73) Patentinhaber: Fehberger, Alex, 8724 Spielberg (AT)
(72) Erfinder: Fehberger, Alex, 8724 Spielberg (AT)
(74) Vertreter: Wirnsberger & Lerchbaum Patentanwälte OG
(86) Internationale Anmeldenummer: PCT/AT2018/060125
(87) Internationale Veröffentlichungsnummer: WO 2019/000005

(56) Entgegenhaltungen:
- DE-A1-102004 024 614
- DE-A1-102010 001 366
- DE-A1-102011 101 278
- DE-U1- 20 023 583
- US-A- 3 270 855

## Beschreibung

Die Erfindung betrifft eine Transportvorrichtung zum Befördern eines Gegenstandes wie einer Karosserie entlang einer Behandlungsstrecke, wobei die Transportvorrichtung eine in einer Transportrichtung entlang der Behandlungsstrecke bewegbare Transporteinheit, eine an der Transporteinheit gelagerte Drehwelle zum Halten des zu behandelnden Gegenstandes und Einbringen desselben in die Behandlungsstrecke sowie einen in einer Arbeitsposition aufragenden Stützarm zur Stützung der Transporteinheit umfasst.

Des Weiteren betrifft die Erfindung eine Anlage zum Tauchlackieren einer Karosserie umfassend ein Tauchbecken, eine Führungskonstruktion und eine derartige Transportvorrichtung.

Ferner betrifft die Erfindung die Verwendung einer derartigen Transportvorrichtung.

Überdies betrifft die Erfindung ein Verfahren zum Befördern eines Gegenstandes, insbesondere einer Karosserie, entlang einer Behandlungsstrecke, wobei eine Transportvorrichtung mit einem aufragenden Stützarm entlang der Behandlungsstrecke und/oder einer Retourstrecke geführt wird.

Aus dem Stand der Technik sind verschiedene Anlagen zum Befördern von Karosserien entlang einer Behandlungsstrecke bekannt, wobei eine Behandlungsstrecke zumindest eine Station zur Oberflächenbehandlung eines Gegenstandes, wie beispielsweise einer Fahrzeugkarosserie, umfasst. Solche Stationen können beispielsweise Tauchbäder oder Lackierkabinen sein, in welche Karosserien zum Lackieren eingebracht werden. Bei einem solchen Vorgang sollen insbesondere große Karosserien platzsparend und stabil transportierbar sein.

Eine Transportvorrichtung mit den Merkmalen des Oberbegriffs des Anspruchs 1 ist zum Beispiel aus der DE 10 2011 101 278 A1 oder der DE 10 2010 001 366 A1 bekannt.

Eine Transportvorrichtung zum Befördern von großen Fahrzeugkarosserien, umfasst zumeist eine Transporteinheit, an welcher eine Drehwelle mit einer Aufnahme für den zu behandelnden Gegenstand gelagert ist, wobei der Gegenstand über die Drehwelle beispielsweise in ein Tauchbecken eintauchbar ist. Zur Stabilisierung kann an der Transporteinheit ein im Wesentlichen senkrecht angeordneter Stützarm vorgesehen sein, welcher die Transportvorrichtung bei Beladung vor einem Kippen bewahrt. Um eine stützende Kraft von ausreichendem Ausmaß bereitzustellen, muss dieser Stützarm eine große Höhe von beispielsweise 2 m oder darüber aufweisen, wodurch eine Hebelwirkung ausgenützt wird. Solche Transportvorrichtungen werden üblicherweise seitlich entlang der Behandlungsstrecke zurückgeführt, um wieder beladen zu werden. Dadurch ergibt sich der Nachteil, dass Anlangen mit einer derartigen Transportvorrichtung breit und dadurch ein Platzbedarf für diese Anlagen groß ist.

Aufgabe der Erfindung ist es demnach, eine Transportvorrichtung der eingangs genannten Art anzugeben, mit welcher eine platzsparende Prozessroute realisierbar ist.

Die weitere Aufgabe der Erfindung ist es, eine Anlage der eingangs genannten Art anzugeben, welche einen geringen Platzbedarf aufweist.

Ferner ist es Aufgabe der Erfindung, eine Verwendung für eine Transportvorrichtung der eingangs genannten Art anzugeben.

Die verfahrensmäßige Aufgabe der Erfindung ist es, ein Verfahren der eingangs genannten Art anzugeben, mit welchem eine platzsparende Prozessroute realisierbar ist.

Die erste Aufgabe wird erfindungsgemäß durch eine Transportvorrichtung mit den Merkmalen des Anspruchs 1 gelöst.

Ein mit der Erfindung erzielter Vorteil ist insbesondere darin zu sehen, dass eine Höhe der Transportvorrichtung reduzierbar ist, wodurch eine Rückfuhrstrecke für die Transportvorrichtung unterhalb einer Behandlungsstrecke verlaufen kann. Hierfür kann der Stützarm abnehmbar, teleskopisch und/oder schwenkbar ausgebildet sein.

Um eine ausreichende Stabilisierung zu gewährleisten, ist es günstig, wenn der Stützarm in der Arbeitsposition im Wesentlichen senkrecht zur Transportrichtung angeordnet ist.

Ein weiterer Vorteil ergibt sich, wenn der Stützarm schwenkbar an der Transporteinheit befestigt ist, wobei eine Schwenkachse senkrecht zur Drehwelle und/oder in Transportrichtung angeordnet ist. Dadurch kann der Stützarm zur Verringerung der Höhe der Transportvorrichtung im Wesentlichen parallel zur Drehwelle ausgerichtet werden, weshalb kein zusätzlicher Platz für den Stützarm eingeplant werden muss.

Es ist weiter günstig, wenn der Stützarm zwischen zwei Endpositionen bewegbar ist, welche einen Winkel zwischen 0° und 180°, bevorzugt von zumindest 60°, insbesondere etwa 90°, einschließen, wobei eine erste Endposition die Arbeitsposition und eine zweite Endposition eine Rückfuhrposition darstellen. Dadurch wird ein ausreichender Platzgewinn gewährleistet, da beispielsweise bei einem Schwenken des senkrechten Stützarmes um 60° eine Höhe desselben auf die Hälfte verringert wird. Der Stützarm weist vorzugsweise in der zweiten Endposition eine geringere Höhe auf, weshalb diese entlang der Rückfuhrstrecke eingenommen wird.

Um den Stützarm in der Arbeits- bzw. Rückfuhrposition zu fixieren und gegen Verkippen oder willkürliches Schwenken abzusichern, ist es zweckmäßig, wenn ein Mittel zur Fixierung des Stützarmes in den Endpositionen vorgesehen ist.

Überdies kann für den Stützarm ein Gegenstück, beispielsweise ein Balken, eine Schiene oder eine beliebige Auflage vorgesehen sein, wodurch die Transportvorrichtung vor einem unerwünschten Kippen bewahrt und entlang einer Behandlungsstrecke stabilisiert ist. Damit der Stützarm möglichst verschleißfrei und mit geringer Reibung bzw. Kraftaufwand entlang des Gegenstücks geführt werden kann, ist ein drehbares Führungselement erfindungsgemäß vorgesehen, welches an einem oberen Ende des Stützarmes positioniert ist. Ein drehbares Führungselement kann beispielsweise zumindest ein Rollelement umfassen.

Die weitere Aufgabe wird erfindungsgemäß durch eine Anlage nach Anspruch 6 gelöst.

Ein mit dieser Anlage erzielter Vorteil ist insbesondere darin zu sehen, dass die Anlage schmal konstruiert werden kann, wodurch diese wenig Platz einnimmt. Das Tauchbecken kann hierfür insbesondere auf einem Gestell oder auf Stützen gelagert sein.

Es ist weiter günstig, wenn die Führungskonstruktion eine Führungsschiene aufweist, in welche das drehbare Führungselement in der Arbeitsposition eingreift. Dadurch ist ein rasches Lösen und Stabilisieren der Transportvorrichtung durch den Stützarm gewährleistet. Ferner ist das drehbare Führungselement mit geringer Reibung in der Führungsschiene führbar. Vorteilhaft ist es, wenn die Führungsschiene hierbei parallel zu der Behandlungsstrecke verläuft. Darüber hinaus ist es günstig, wenn die Führungsschiene in einem Bereich des oberen Endes des Stützarmes angeordnet ist.

Ein weiterer Vorteil ergibt sich, wenn die Führungskonstruktion eine Stützschiene aufweist, in welche das drehbare Führungselement in der Rückfuhrposition eingreift. Dadurch ist eine Stabilisierung des Stützarmes gewährleistet, wodurch eine Kraft auf eine schwenkbare Befestigung des Stützarmes an der Transportvorrichtung reduziert ist. Eine derartige Befestigung kann beispielsweise ein Scharnier oder ein ähnliches um eine Achse schwenkbares Gelenk sein. Es ist vorteilhaft, wenn eine Kraft auf die Befestigung reduziert wird, da so eine Lebensdauer der Befestigung erhöht ist.

Es ist weiter zweckmäßig, wenn die Führungskonstruktion eine Fahrschiene aufweist, in welche zumindest ein Rollelement der Transporteinheit entlang der Behandlungsstrecke eingreift. Dadurch kann die Transportvorrichtung zur Behandlung des Gegenstandes entlang eines definierten Weges geführt werden.

Ferner ist es zweckmäßig, wenn die Führungskonstruktion eine weitere Fahrschiene aufweist, in welche zumindest ein Rollelement der Transporteinheit entlang der Rückfuhrstrecke eingreift. Dadurch kann die Transportvorrichtung nach der Behandlung des Gegenstandes entlang eines definierten Weges zurückgeführt werden.

Um die Transportvorrichtung von einer ersten Strecke, welche in Transportrichtung entlang der Behandlungsstrecke verläuft, auf die darunterliegende und in entgegengesetzter Richtung verlaufende Rückfuhrstrecke zu bewegen, ist es günstig, wenn eine Hubeinrichtung zum Anheben und/oder Absenken der Transportvorrichtung vorgesehen ist.

Um die Transportvorrichtung von einer ersten Strecke, welche in Transportrichtung entlang der Behandlungsstrecke verläuft, auf eine weitere Strecke zu bewegen, ist es günstig, wenn ein Schwenktisch vorgesehen ist, wobei eine Drehachse des Schwenktisches senkrecht zur Fahrschiene ausgerichtet ist. Die weitere Strecke kann beispielsweise neben der ersten Strecke liegen und entlang einer weiteren Behandlungsstrecke führen. Die weitere Strecke verläuft hierbei in entgegengesetzter Richtung zur Transportrichtung. Diese kann beispielsweise eine erste Strecke einer weiteren Anlage sein; somit können mit dem Schwenktisch zwei Anlagen verbunden sein. Alternativ dazu kann die Transportvorrichtung auch entlang dieser weiteren Strecke zu einem Anfang der Behandlungsstrecke zurückgeführt werden.

Die weitere Aufgabe wird bei einer Verwendung einer erfindungsgemäßen Transportvorrichtung zum Tauchlackieren von Karosserien gelöst.

Ein mit dieser Verwendung erzielter Vorteil kann darin gesehen werden, dass mit dieser Transportvorrichtung die Höhe des Stützarmes reduziert und die Transportvorrichtung in der Folge platzsparend unterhalb der Behandlungsstrecke zurückgeführt werden kann.

Die verfahrensmäßige Aufgabe wird durch das Verfahren nach Anspruch 14 gelöst.

Ein mit diesem Verfahren erzielter Vorteil ist insbesondere darin zu sehen, dass die Behandlung des Gegenstandes auf engem Raum erfolgen kann.

Es ist vorteilhaft, wenn ein Stützarm der Transportvorrichtung am Ende der Behandlungsstrecke oder an einem Beginn der Retourstrecke von einer Arbeitsposition in eine Rückfuhrposition und an einem Anfang der Behandlungsstrecke oder an einem Ende der Retourstrecke von einer Rückfuhrposition in eine Arbeitsposition bewegt wird. Dadurch ist gewährleistet, dass die Transportvorrichtung durch den Stützarm während der Behandlung des Gegenstandes gestützt wird. Ferner ist der Stützarm entlang einer Retourstrecke in einer Rückfuhrposition angeordnet, wodurch eine Höhe der Transportvorrichtung reduziert wird. Ein damit erzielter Vorteil ist insbesondere darin zu sehen, dass die Behandlung des Gegenstandes zusätzlich zum engen Raum auch auf niedrigem Raum erfolgen kann.

Um ausreichend Platz für ein Einklappen des Stützarmes bereitzustellen, ist es zweckmäßig, wenn eine Halterung für den Gegenstand mit einer Drehbewegung nach unten geschwenkt bzw. rotiert wird. Hierfür kann beispielsweise eine Drehwelle, an welcher die Halterung befestigt ist, gedreht werden, sodass die Halterung unterhalb der Drehwelle positioniert ist.

Es ist weiter zweckmäßig, wenn die Transportvorrichtung am Ende der Behandlungsstrecke mittels einer Hubeinrichtung zur Retourstrecke abgesenkt und am Ende der Retourstrecke mittels einer Hubeinrichtung zur Behandlungsstrecke angehoben wird.

Die Erfindung wird im Weiteren detailliert erläutert. In den Zeichnungen auf welche dabei Bezug genommen wird zeigen:
Fig. 1a und b eine Transportvorrichtung mit einem schwenkbaren Stützarm;
Fig. 2 eine weitere Ansicht der Transportvorrichtung;
Fig. 3a bis f jeweils eine Detailansicht einer Fixiereinrichtung;
Fig. 4 einen Teil einer ersten Ausführungsform einer Anlage;
Fig. 5 einen weiteren Teil der ersten Ausführungsform der Anlage;
Fig. 6a bis b einen Teil einer weiteren Ausführungsform der Anlage.

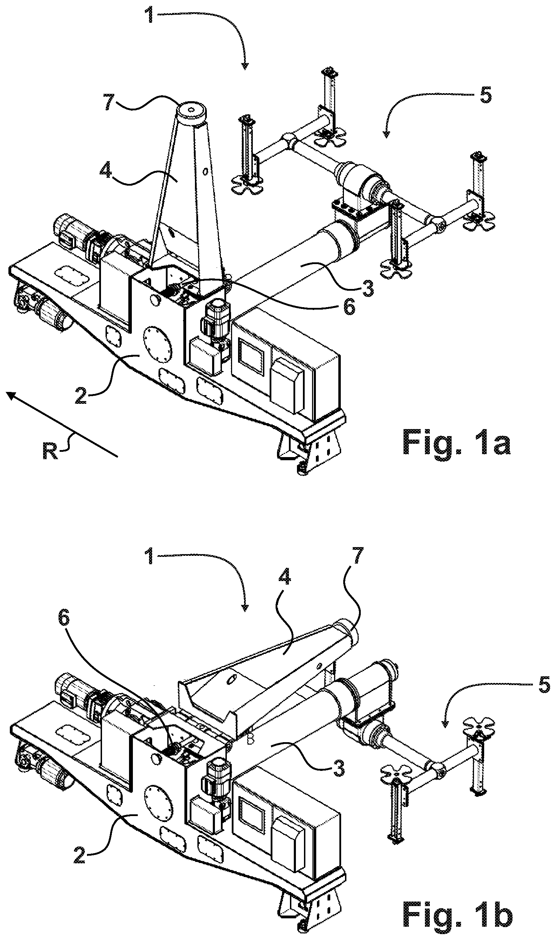

Eine erste Ausführungsform einer Transportvorrichtung 1 ist in Fig. 1a und b dargestellt. Die Transportvorrichtung 1 umfasst eine Transporteinheit 2, eine an dieser gelagerte Drehwelle, einen Stützarm 4, sowie eine Halterung 5 für einen Gegenstand, insbesondere für eine Fahrzeugkarosserie.

In Fig. 1a ist die Transportvorrichtung 1 in einer Arbeitseinstellung dargestellt, wobei der Stützarm 4 eine Arbeitsposition einnimmt, in welcher dieser im Wesentlichen senkrecht aufragt. Bei diesem Ausführungsbeispiel ist ein Hauptrohr 3 mit der Transporteinheit 2 verbunden, beispielsweise mit dieser verschraubt. Die Drehwelle ist zumindest teilweise innerhalb des Hauptrohres 3 geführt, wobei an Enden des Hauptrohres 3 jeweils ein Gleitlager zur drehbaren Lagerung der Drehwelle vorgesehen ist. Das Hauptrohr 3 dient hierbei zur Stützung der Drehwelle und kann wie in Fig. 1a gezeigt vollflächig ausgebildet sein. Alternativ kann das Hauptrohr 3 eine Vielzahl von Ausnehmungen zur Gewichts- und Materialreduktion aufweisen. Statt des Hauptrohres 3 kann auch eine alternative Einrichtung zur Stützung der Drehwelle vorgesehen oder die Drehwelle freitragend mit der Transporteinheit 2 verbunden sein. Die Halterung 5 ist an der Drehwelle fixiert und in dieser Darstellung nach oben orientiert. Im Betrieb kann die Halterung 5 um eine Drehachse der Drehwelle rotiert werden, um den Gegenstand beispielsweise in ein Tauchbecken einzubringen bzw. durch ein Tauchbecken zu führen oder in diesem zu schwenken. Die Drehwelle ist hierfür an der Transporteinheit 2 im Wesentlichen senkrecht zu einer Transportrichtung R gelagert. Es kann weiter vorgesehen sein, dass die Halterung 5 um eine oder mehrere weitere Achsen drehbar gelagert ist. An einem oberen Ende des Stützarmes 4 ist ein Rollelement 7 vorgesehen, womit bei einer Auflage des Stützarmes 4 ein Reibungswiderstand reduziert ist. Hierfür können alternativ auch mehrere Rollelemente 7 vorgesehen sein.

In Fig. 1b ist die Transportvorrichtung 1 in einer Rückfuhreinstellung dargestellt, wobei der Stützarm 4 eine Rückfuhrposition einnimmt, in welcher dieser im Wesentlichen 90° zur Arbeitsposition gekippt ist, wodurch eine Höhe der gesamten Transportvorrichtung 1 reduziert ist. Die Rückfuhrposition ist allerdings nicht auf eine dargestellte Anordnung beschränkt. Grundsätzlich kann der Stützarm 4 um einen beliebigen Winkel eingeklappt werden, um eine Höhe der Transportvorrichtung 1 zu reduzieren und in die Rückfuhrposition gebracht zu werden. Vorzugsweise schließen die Arbeits- und Rückfuhrposition des Stützarmes 4 einen Winkel zwischen 60° und 90° ein. In der Rückfuhreinstellung ist die Halterung 5 auf eine dem Stützarm 4 abgewandte Seite der Drehwelle rotiert. Dadurch ist ausreichend Platz für den eingeklappten Stützarm 4 bereitgestellt. Der Stützarm 4 ist sowohl in der Arbeitsposition als auch in der Rückfuhrposition durch eine, insbesondere lösbare, Fixiereinrichtung 6 fixiert.

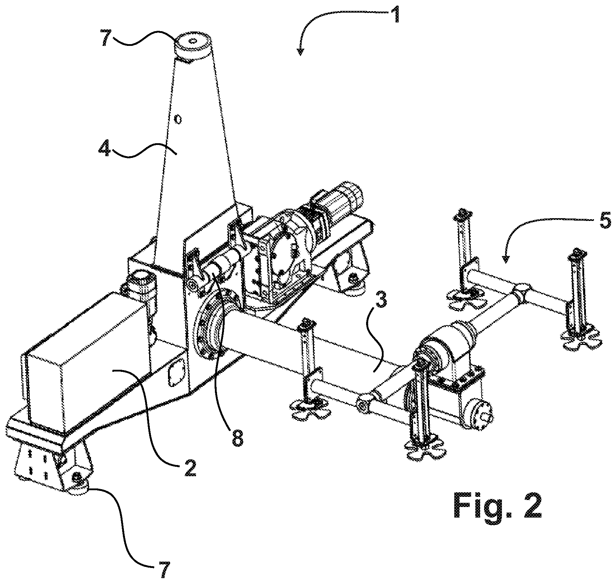

Fig. 2 zeigt eine weitere Ansicht der Transportvorrichtung 1 in der Arbeitseinstellung, in welcher weitere Rollelemente 7 und ein Scharnier 8 ersichtlich sind. Diese Rollelemente 7 sind an der Transporteinheit 2 angeordnet, um einen Reibungswiderstand zu reduzieren, wenn diese bewegt wird. Das Scharnier 8 ist einerseits an der Transporteinheit 2 und andererseits am Stützarm 4 fixiert, um den Stützarm 4 schwenkbar mit der Transporteinheit 2 zu verbinden. Alternativ dazu können auch andere Verbindungen vorgesehen sein, welche eine schwenkbare Verbindung ermöglichen.

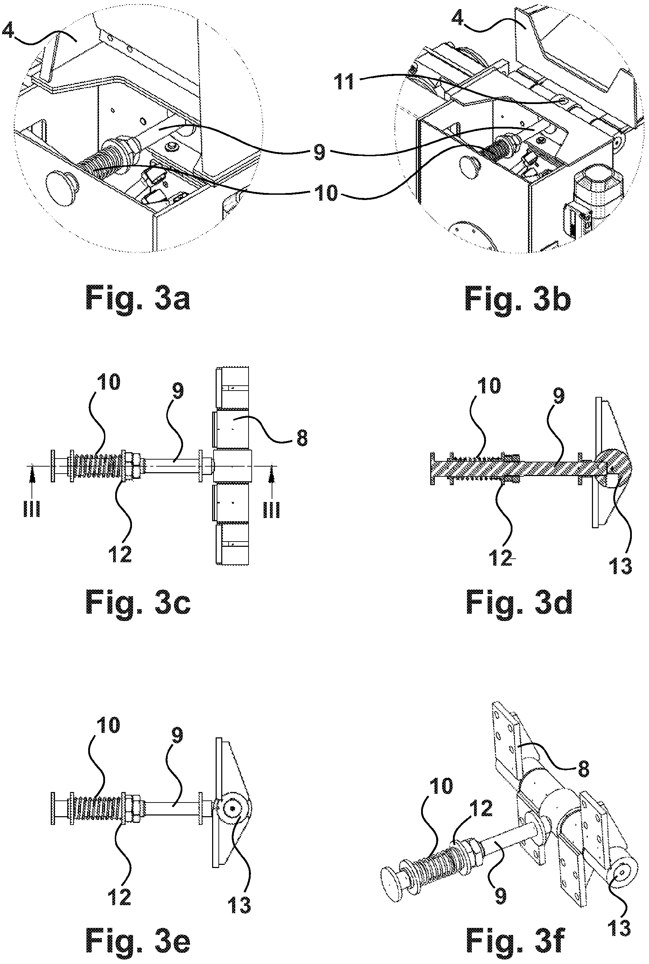

In Fig. 3a ist eine Detailansicht der Fixiereinrichtung 6 gezeigt, wobei der Stützarm 4 in der Arbeitsposition fixiert ist. Hierbei greift ein Fixierbolzen 9 in eine Aussparung 11 im Scharnierbolzen 13 ein, wodurch dieser gegen ein Verdrehen gesichert und der Stützarm 4 fixiert ist, insbesondere gegen ein versehentliches Einklappen oder Schwenken.

In Fig. 3b ist die Fixiereinrichtung 6 gezeigt, wobei der Stützarm 4 in der Rückfuhrposition fixiert ist. Im Scharnierbolzen 13 ist für jede Position des Stützarmes 4 eine Aussparung 11 vorgesehen, sodass der Stützarm 4 in den Aussparungen 11 entsprechende, diskrete Positionen bringbar ist. Bei der gezeigten Ausführungsform ist jeweils eine Aussparung 11 für die Arbeits- und für die Rückfuhrposition vorgesehen. Der Fixierbolzen 9 wird mittels Federelement 10 in die Aussparung 11 gedrückt. Um den Stützarm 4 zu schwenken, muss einer Federkraft entgegengewirkt und der Fixierbolzen 9 aus der Aussparung 11 bewegt werden.

In Fig. 3c ist die Fixiereinrichtung 6 in einer Draufsicht dargestellt. Das Scharnier 8 ist in einer der Arbeitsposition entsprechenden Ausrichtung dargestellt. Der Fixierbolzen 9 ist mittels Federelement 10 in die nicht ersichtliche Aussparung 11 gepresst. Als Anpressfläche für das Federelement 10 kann beispielsweise eine am Fixierbolzen 9 angeordnete Scheibe 12 dienen.

In Fig. 3d ist ein Querschnitt entlang der Linie III-III gezeigt, wobei der Fixierbolzen 9 in die Aussparung 11 im Scharnierbolzen 13 eingreift.

In Fig. 3e und f sind eine seitliche und eine ganzheitliche Ansicht der Fixiereinrichtung 6 gezeigt.

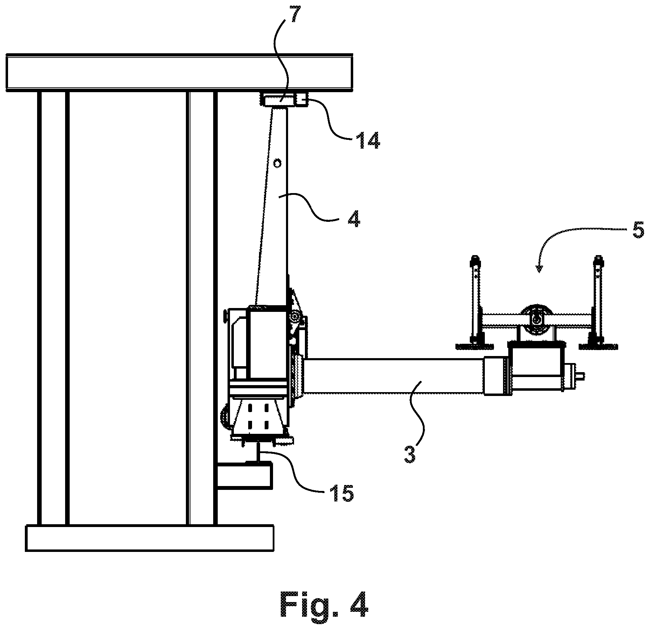

Fig. 4 zeigt einen Teil einer Anlage zum Tauchlackieren von Gegenständen, wobei der Stützarm 4 in der Arbeitsposition ist und mit dem Rollelement 7 in eine Führungsschiene 14 eingreift, wodurch die Transportvorrichtung 1 stabilisiert wird. Die Transporteinheit 2 greift mit weiteren Rollelementen 7 in eine Fahrschiene 15 ein, wodurch diese in eine Transportrichtung R gemäß Fig. 1a geführt werden kann. Die Transportrichtung R verläuft hierbei senkrecht zu einer Ansichtsfläche. Die Halterung 5 ist in dieser Ansicht nach oben hin orientiert, allerdings während des Betriebes insbesondere entlang einer Behandlungsstrecke um die Achse der Drehwelle drehbar.

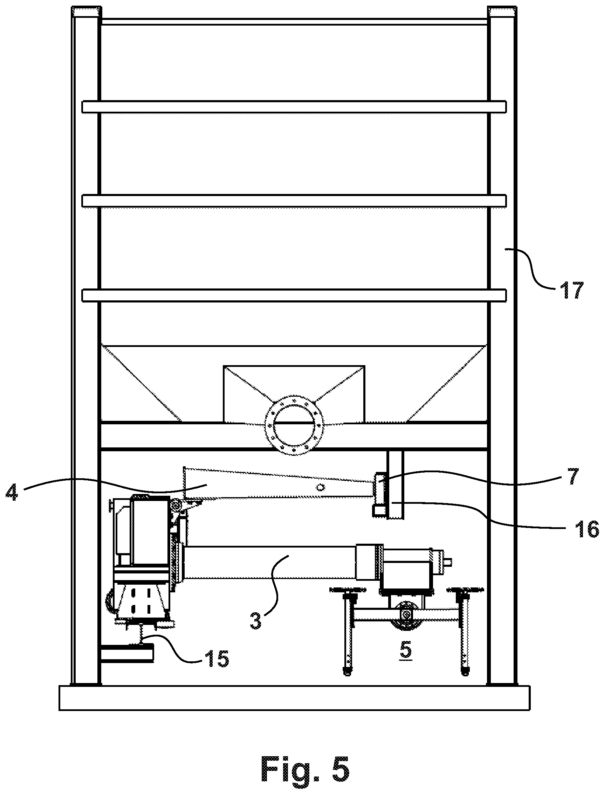

Fig. 5 zeigt einen weiteren Teil einer Anlage zum Tauchlackieren von Gegenständen, wobei der Stützarm 4 in der Rückfuhrposition liegt und mit dem Rollelement 7 in eine Stützschiene 16 eingreift. Somit lastet das Gewicht des Stützarmes 4 zumindest teilweise auf der Stützschiene 16, wodurch eine Belastung des Scharniers 8 reduziert ist. Ferner ist die Halterung 5 nach unten rotiert, um Platz für den Stützarm 4 zu schaffen. Aufgrund des Platzgewinnes durch den eingeklappten Stützarm 4 kann die Transportvorrichtung 1 unterhalb einer Behandlungsstrecke, beispielsweise einem Tauchbecken, geführt werden, wobei das Tauchbecken hierfür auf einem Gestell 17 angeordnet sein kann. Somit ist eine schmale Bauform einer Anlage zum Tauchlackieren von Karosserien ermöglicht. Eine Breite der Anlage ist demnach im Wesentlichen auf eine Breite des Gestells 17 bzw. des Tauchbeckens beschränkt. Es kann allerdings vorgesehen sein, dass optionale Einheiten, wie beispielsweise Antriebseinheiten oder Steuereinheiten, die Breite der Anlage vergrößern. Zum Zurückführen der Transportvorrichtung 1 ist entlang der Rückfuhrstrecke ebenfalls eine Fahrschiene 15 vorgesehen.

Im Allgemeinen wird eine Transportvorrichtung 1 mit einem zu behandelnden Gegenstand in einer Transportrichtung R entlang einer Behandlungsstrecke geführt und nach Abgabe des Gegenstandes am Ende der Behandlungsstrecke entlang einer Rückfuhrstrecke zu einem Ausgangspunkt zurückgeführt. Im gezeigten Ausführungsbeispiel kann eine Rückfuhrstrecke unterhalb der Behandlungsstrecke liegen.

Alternativ zum schwenkbaren Stützarm 4 kann vorgesehen sein, dass der Stützarm 4 teleskopisch ein- bzw. ausfahrbar ist, wodurch ebenfalls eine Höhe der Transportvorrichtung 1 reduziert und die Transportvorrichtung 1 platzsparend unterhalb der Behandlungsstrecke zurückgeführt werden kann.

In einer weiteren Ausführung, die nicht Teil der vorliegenden Erfindung ist, kann der Stützarm 4 lösbar mit der Transportvorrichtung 1 verbunden sein, beispielsweise mittels Steckverbindung. Hierbei kann der Stützarm 4 von der Transportvorrichtung 1 gelöst und auf diese gelegt und fixiert werden, wodurch ebenfalls eine Höhe der Transportvorrichtung 1 reduziert ist und die Rückfuhrstrecke unterhalb der Behandlungsstrecke liegen kann.

Alternativ dazu, und auch nicht Teil der Erfindung, kann der von der Transportvorrichtung 1 gelöste Stützarm 4 entlang einer weiteren Strecke, beispielsweise hängend, zurückgeführt und an einem Beginn der Behandlungsstrecke bereitgestellt und mit einer Transporteinheit 2 verbunden werden. Bei einer solchen Ausführung kann die Transporteinheit 2 ebenfalls platzsparend unterhalb der Behandlungsstrecke zurückgeführt werden.

Um die Transportvorrichtung 1 bzw. die Transporteinheit 2 von einer Behandlungsstrecke auf eine darunter liegende Rückfuhrstrecke bzw. von einer Rückfuhrstrecke auf eine darüber liegende Behandlungsstrecke zu bewegen, kann eine Hubeinrichtung vorgesehen sein. Es ist hierfür zweckmäßig, wenn die Hubeinrichtung die Rollelemente 7 von den jeweiligen Schienen 14, 15, 16 entkoppelt. Hierbei kann beispielsweise das Rollelement 7 am oberen Ende des Stützarmes 4 aus der Führungsschiene 14 gebracht, die gesamte Transportvorrichtung 1 abgesenkt, der Stützarm 4 eingeklappt und in der Folge das Rollelement 7 in eine Stützschiene 16 eingebracht werden. Eine Hubeinrichtung kann beispielsweise eine in einer Höhe verstellbare oder kippbare Fahrschiene 14 sein, welche gewährleistet, dass die Transportvorrichtung 1 in eine an der Rückfuhrstrecke angeordnete Fahrschiene 14 eingreifen kann.

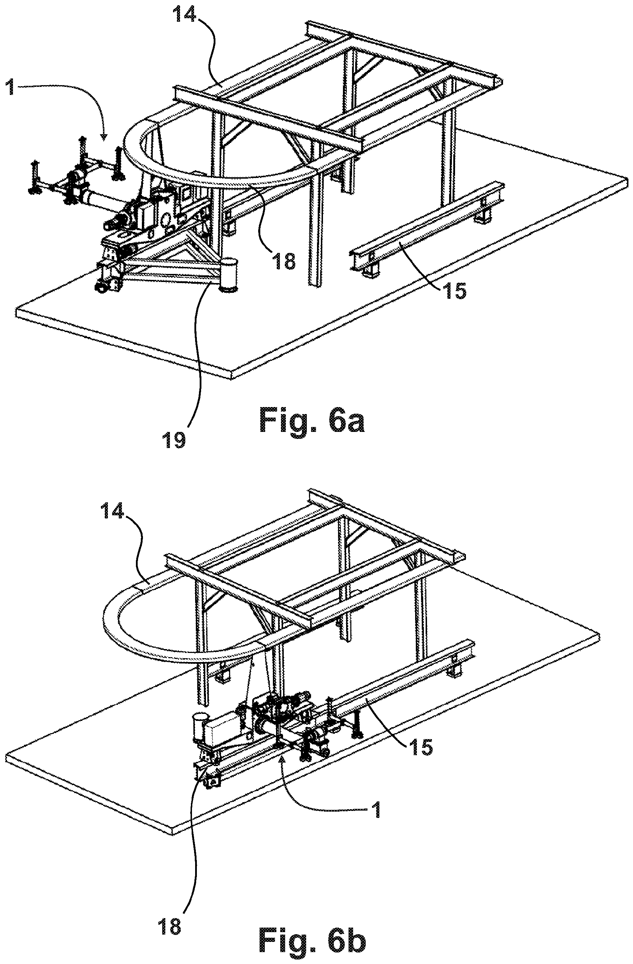

In Fig. 6a bis b ist eine weitere Ausführungsform einer Anlage zum Tauchlackieren einer Fahrzeugkarosserie gezeigt. Hierbei ist eine Rückfuhrstrecke parallel zur Behandlungsstrecke angeordnet. Die Führungsschienen 14 der Rückfuhrstrecke und der Behandlungsstrecke sind hierbei über eine gekrümmte Führungsschiene 18 verbunden. Des Weiteren ist ein Schwenktisch 19 vorgesehen. Im Betrieb erreicht die Transportvorrichtung 1 den Schwenktisch 19 und wird in diesem fixiert. In der Folge wird die Transportvorrichtung 1 entlang der gekrümmten Führungsschiene 18 bewegt, wodurch der Schwenktisch 19 mit der Transportvorrichtung 1 um eine Achse gedreht wird. Die Transportvorrichtung 1 kann wieder freigegeben und entlang einer Fahrschiene 15 weiter entlang einer Prozessroute geführt werden. Dies kann beispielsweise entlang einer Rückfuhrstrecke oder einer weiteren Behandlungsstrecke erfolgen. Somit können beispielsweise mehrere Behandlungsstrecken miteinander verknüpft sein.

## Patentansprüche

1. Transportvorrichtung (1) zum Befördern eines Gegenstandes wie einer Karosserie entlang einer Behandlungsstrecke, wobei die Transportvorrichtung (1) eine in einer Transportrichtung (R) entlang der Behandlungsstrecke bewegbare Transporteinheit (2), eine an der Transporteinheit (2) gelagerte Drehwelle zum Halten des zu behandelnden Gegenstandes und Einbringen desselben in die Behandlungsstrecke sowie einen in einer Arbeitsposition aufragenden Stützarm (4) zur Stützung der Transporteinheit (2) umfasst, wobei die Transporteinheit (2) zumindest ein Rollelement (7) aufweist und ein drehbares Führungselement vorgesehen ist, welches an einem oberen Ende des Stützarmes (4) positioniert ist, **dadurch gekennzeichnet, dass** der Stützarm (4) bewegbar ist, sodass eine Höhe der Transportvorrichtung (1) veränderbar ist.

2. Transportvorrichtung (1) nach Anspruch 1, **dadurch gekennzeichnet, dass** der Stützarm (4) in der Arbeitsposition im Wesentlichen senkrecht zur Transportrichtung (R) angeordnet ist.

3. Transportvorrichtung (1) nach Anspruch 1 oder 2, **dadurch gekennzeichnet, dass** der Stützarm (4) schwenkbar an der Transporteinheit (2) befestigt ist, wobei eine Schwenkachse senkrecht zur Drehwelle und/oder in Transportrichtung (R) angeordnet ist.

4. Transportvorrichtung (1) nach einem der Ansprüche 1 bis 3, **dadurch gekennzeichnet, dass** der Stützarm (4) zwischen zwei Endpositionen bewegbar ist, welche einen Winkel zwischen 0° und 180°, bevorzugt von zumindest 60°, insbesondere etwa 90°, einschließen, wobei eine erste Endposition die Arbeitsposition und eine zweite Endposition eine Rückfuhrposition darstellen.

5. Transportvorrichtung (1) nach Anspruch 4, **dadurch gekennzeichnet, dass** ein Mittel zur Fixierung des Stützarmes (4) in den Endpositionen vorgesehen ist.

6. Anlage zum Tauchlackieren einer Karosserie umfassend ein Tauchbecken, eine Führungskonstruktion und eine Transportvorrichtung (1) nach einem der Ansprüche 1 bis 5, wobei das Tauchbecken beabstandet zu einem Boden, auf welchem die Anlage steht, gelagert ist, wobei die Transportvorrichtung (1) entlang einer Behandlungsstrecke oberhalb und entlang einer Rückführungsstrecke unterhalb des Tauchbeckens führbar ist.

7. Anlage nach Anspruch 6, **dadurch gekennzeichnet, dass** die Führungskonstruktion eine Führungsschiene (14) aufweist, in welche das drehbare Führungselement in der Arbeitsposition eingreift.

8. Anlage nach Anspruch 6 oder 7, **dadurch gekennzeichnet, dass** die Führungskonstruktion eine Stützschiene (16) aufweist, in welche das drehbare Führungselement in der Rückfuhrposition eingreift.

9. Anlage nach einem der Ansprüche 6 bis 8, **dadurch gekennzeichnet, dass** die Führungskonstruktion eine Fahrschiene (15) aufweist, in welche das zumindest eine Rollelement (7) der Transporteinheit (2) entlang der Behandlungsstrecke eingreift.

10. Anlage nach einem der Ansprüche 6 bis 9, **dadurch gekennzeichnet, dass** die Führungskonstruktion eine weitere Fahrschiene (15) aufweist, in welche zumindest ein Rollelement (7) der Transporteinheit (2) entlang der Rückfuhrstrecke eingreift.

11. Anlage nach einem der Ansprüche 6 bis 10, **dadurch gekennzeichnet, dass** zumindest eine Hubeinrichtung zum Anheben und/oder Absenken der Transportvorrichtung (1) vorgesehen ist.

12. Anlage nach einem der Ansprüche 6 bis 11, **dadurch gekennzeichnet, dass** ein Schwenktisch (19) vorgesehen ist, um die Transportvorrichtung (1) von einer ersten Strecke, welche in Transportrichtung entlang der Behandlungsstrecke verläuft, auf eine weitere Strecke zu bewegen, wobei eine Drehachse des Schwenktisches (19) senkrecht zur Fahrschiene (15) ausgerichtet ist.

13. Verwendung einer Transportvorrichtung (1) nach einem der Ansprüche 1 bis 5 zum Tauchlackieren von Karosserien.

14. Verfahren zum Befördern eines Gegenstandes, insbesondere einer Karosserie, entlang einer Behandlungsstrecke, wobei eine Transportvorrichtung (1) nach einem der Ansprüche 1 bis 5 entlang der Behandlungsstrecke und/oder einer Retourstrecke geführt wird, wobei an einem Ende der Behandlungsstrecke der Gegenstand abgegeben wird und die Transportvorrichtung ohne den Gegenstand entlang einer Retourstrecke unterhalb der Behandlungsstrecke zu einem Ausgangspunkt rückgeführt wird.

15. Verfahren nach Anspruch 14, **dadurch gekennzeichnet, dass** ein Stützarm (4) der Transportvorrichtung (1) am Ende der Behandlungsstrecke oder an einem Beginn der Retourstrecke von einer Arbeitsposition in eine Rückfuhrposition und an einem Anfang der Behandlungsstrecke oder an einem Ende der Retourstrecke von einer Rückfuhrposition in eine Arbeitsposition bewegt wird.

16. Verfahren nach Anspruch 14 oder 15, **dadurch gekennzeichnet, dass** eine Halterung (5) für den Gegenstand mit einer Drehbewegung nach unten geschwenkt wird.

17. Verfahren nach einem der Ansprüche 14 bis 16, **dadurch gekennzeichnet, dass** die Transportvorrichtung (1) am Ende der Behandlungsstrecke mittels einer Hubeinrichtung zur Retourstrecke abgesenkt wird und am Ende der Retourstrecke mittels einer Hubeinrichtung zur Behandlungsstrecke angehoben wird.

## Claims

1. A transport device (1) for conveying an object such as a vehicle body along a treatment section, wherein the transport device (1) comprises a transport unit (2) which can be moved in a transport direction (R) along the treatment section, a rotating shaft mounted on the transport unit (2) for holding the object to be treated and for introducing the same into the treatment section, and a supporting arm (4) projecting upwards in a working position for supporting the transport unit (2), wherein the transport unit (2) comprises at least one rolling element (7) and a rotatable guide element is provided, which is positioned at an upper end of the supporting arm (4), **characterised in that** the supporting arm (4) is movable so that a height of the transport device (1) can be changed.

2. The transport device (1) according to claim 1, **characterised in that** the supporting arm (4) is arranged essentially perpendicular to the transport direction (R) in the working position.

3. The transport device (1) according to claim 1 or 2, **characterised in that** the supporting arm (4) is pivotably attached to the transport unit (2), wherein a pivot axis is arranged perpendicular to the rotating shaft and/or in the transport direction (R).

4. The transport device (1) according to any one of claims 1 to 3, **characterised in that** the supporting arm (4) is movable between two end positions, which enclose an angle between 0° and 180°, preferably of at least 60°, in particular approximately 90°, wherein a first end position represents the working position and a second end position represents a return position.

5. The transport device (1) according to claim 4, **characterised in that** a means for fixing the supporting arm (4) in the end positions is provided.

6. An installation for dip-coating of a vehicle body comprising a dip tank, a guide structure and a transport device (1) according to any one of claims 1 to 5, wherein the dip tank is mounted at a distance from a base, on which the installation stands, wherein the transport device (1) can be guided along a treatment section above the dip tank and along a return section below the dip tank.

7. The installation according to claim 6, characterised that in the guide structure comprises a guide rail (14), into which the rotatable guide element engages in the working position.

8. The installation according to claim 6 or 7, **characterised in that** the guide structure comprises a support rail (16), into which the rotatable guide element engages in the return position.

9. The installation according to any one of claims 6 to 8, **characterised in that** the guide structure comprises a travel rail (15), into which the at least one rolling element (7) of the transport unit (2) engages along the treatment section.

10. The installation according to any one of claims 6 to 9, **characterised in that** the guide structure comprises a further travel rail (15), into which at least one rolling element (7) of the transport unit (2) engages along the return section.

11. The installation according to any one of claims 6 to 10, **characterised in that** at least one lifting device for raising and/or lowering the transport device (1) is provided.

12. The installation according to any one of claims 6 to 11, **characterised in that** a swivel table (19) is provided, in order to move the transport device (1) from a first section, which runs in the transport direction along the treatment section, to a further section, wherein the axis of rotation of the swivel table (19) is orientated perpendicular to the travel rail (15).

13. Use of a transport device (1) according to any one of claims 1 to 5 for the dip-coating of vehicle bodies.

14. A method for conveying an object, in particular a vehicle body, along a treatment section, wherein a transport device (1) according to any one of claims 1 to 5 is guided along the treatment section and/or a return section, wherein the object is delivered at one end of the treatment section and the transport device is returned to a starting point without the object along a return section under the treatment section.

15. The method according to claim 14, **characterised in that** a supporting arm (4) of the transport device (1) is moved from a working position into a return position at the end of the treatment section or at the beginning of the return section and moved from a return position into a working position at the beginning of the treatment section or at the end of the return section.

16. The method according to claim 14 or 15, **characterised in that** a holder (5) for the object is pivoted downwards with a rotational movement.

17. The method according to any one of claims 14 to 16, **characterised in that** the transport device (1) is lowered at the end of the treatment section by means of a lifting device for the return section and is raised at the end of the return section by means of a lifting device for the treatment section.

## Revendications

1. Dispositif de transport (1), destiné à convoyer un objet, tel qu'une carrosserie le long d'un trajet de traitement, le dispositif de transport (1) comprenant une unité de transport (2) déplaçable dans une direction de transport (R) le long du trajet de traitement, un arbre rotatif logé sur l'unité de transport (2), destiné à maintenir l'objet qui doit être traité et à insérer celui-ci dans le trajet de traitement, ainsi qu'un bras de support (4) saillant vers le haut dans la position de travail, destiné à supporter l'unité de transport (2), l'unité de transport (2) comportant au moins un élément roulant (7) et un élément de guidage rotatif étant prévu, lequel est positionné sur une extrémité supérieure du bras de support (4) , **caractérisé en ce que** le bras de support (4) est déplaçable, de telle sorte qu'une hauteur du dispositif de transport (1) soit variable.

2. Dispositif de transport (1) selon la revendication 1, **caractérisé en ce que** dans la position de travail, le bras de support (4) est placé sensiblement à la perpendiculaire de la direction de transport (R).

3. Dispositif de transport (1) selon la revendication 1 ou 2, **caractérisé en ce que** le bras de support (4) est fixé de manière pivotante sur l'unité de transport (2), un axe de pivotement étant placé à la perpendiculaire de l'arbre rotatif et / ou dans la direction de transport (R).

4. Dispositif de transport (1) selon l'une quelconque des revendications 1 à 3, **caractérisé en ce que** le bras de support (4) est déplaçable entre deux positions extrêmes, lesquelles incluent un angle compris entre 0° et 180°, de préférence d'au moins 60°, notamment d'environ 90°, une première position extrême correspondant à la position de travail et une deuxième position extrême correspondant à une position de restitution.

5. Dispositif de transport (1) selon la revendication 4, **caractérisé en ce qu'**il est prévu un moyen destiné à fixer les bras de support (4) dans les positions extrêmes.

6. Installation, destinée à peindre par immersion une carrosserie, comprenant une cuve d'immersion, une structure de guidage et un dispositif de transport (1) selon l'une quelconque des revendications 1 à 5, la cuve d'immersion étant logée avec un écart par rapport à un sol sur lequel est implantée l'installation, le dispositif de transport (1) pouvant être guidé le long d'un trajet de traitement, au-dessus et le long d'un trajet de restitution, en-dessous de la cuve d'immersion.

7. Installation selon la revendication 6, **caractérisée en ce que** la structure de guidage comporte un rail de guidage (14) dans lequel l'élément de guidage rotatif s'engage dans la position de travail.

8. Installation selon la revendication 6 ou 7, **caractérisée en ce que** la structure de guidage comporte un rail d'appui (16) dans lequel l'élément de guidage rotatif s'engage dans la position de restitution.

9. Installation selon l'une quelconque des revendications 6 à 8, **caractérisée en ce que** la structure de guidage comporte un rail de roulement (15) dans lequel l'au moins un élément roulant (7) de l'unité de transport (2) s'engage le long du trajet de traitement.

10. Installation selon l'une quelconque des revendications 6 à 9, **caractérisée en ce que** la structure de guidage comporte un rail de roulement (15) supplémentaire, dans lequel au moins un élément roulant (7) de l'unité de transport (2) s'engage le long du trajet de restitution.

11. Installation selon l'une quelconque des revendications 6 à 10, **caractérisée en ce qu'**au moins un système de levage est prévu pour relever et / ou abaisser le dispositif de transport (1).

12. Installation selon l'une quelconque des revendications 6 à 11, **caractérisée en ce qu'**il est prévu un plateau pivotant (19), pour déplacer le dispositif de transport (1) d'un premier trajet, lequel s'écoule dans la direction de transport le long du trajet de traitement sur un autre trajet, un axe de rotation du plateau pivotant (19) étant orienté à la perpendiculaire du rail de roulement (15).

13. Utilisation d'un dispositif de transport (1) selon l'une quelconque des revendications 1 à 5 pour peindre par immersion des carrosseries.

14. Procédé, destiné à convoyer un objet, notamment une carrosserie le long d'un trajet de traitement, un dispositif de transport (1) selon l'une quelconque des revendications 1 à 5 étant guidé le long du trajet de traitement et / ou d'un trajet de retour, l'objet étant restitué sur une extrémité du trajet de traitement et le dispositif de transport étant ramené en arrière sans l'objet vers un point de départ, le long d'un trajet de retour en dessous du trajet de traitement.

15. Procédé selon la revendication 14, **caractérisé en ce qu'**un bras de support (4) du dispositif de transport (1) est déplacé sur une fin du trajet de traitement ou sur un début du trajet de retour d'une position de travail dans une position de restitution et à un début du trajet de traitement ou à une fin du trajet de retour, d'une position de restitution dans une position de travail.

16. Procédé selon la revendication 14 ou 15, **caractérisé en ce qu'**une attache (5) pour l'objet est pivotée vers le bas par un déplacement en rotation.

17. Procédé selon l'une quelconque des revendications 14 à 16, **caractérisé en ce que** le dispositif de transport (1) est abaissé à la fin du trajet de traitement au moyen d'un système de levage vers le trajet de retour et à la fin du trajet de retour, est relevé au moyen d'un système de levage sur le trajet de traitement.
